# EUROPEAN PATENT SPECIFICATION

(11) **EP 2 320 151 B1**
(45) Date of publication and mention of the grant of the patent: **09.09.2015**
(21) Application number: 09802665.1
(22) Date of filing: 23.07.2009
(51) Int. Cl.: F24F 11/02, F25B 1/00

(54) **AIR-CONDITIONING DEVICE**
KLIMAANLAGE
DISPOSITIF DE CLIMATISATION

(30) Priority: 29.07.2008 JP 2008194955
(43) Date of publication of application: 11.05.2011
(73) Proprietor: Daikin Industries, Ltd., Osaka 530-8323 (JP)
(72) Inventor: KOJIMA, Akiharu, Sakai-shi Osaka 591-8511 (JP)
(74) Representative: Hoffmann Eitle
(86) International application number: PCT/JP2009/003468
(87) International publication number: WO 2010/013416

(56) References cited:
- EP-A1- 1 050 727
- EP-A1- 1 923 647
- EP-A2- 1 674 807
- EP-A2- 1 884 725
- WO-A1-02/086396
- DE-A1- 4 008 877
- JP-A- 8 028 983
- JP-A- 2007 003 015
- US-A- 5 551 248
- US-A- 6 161 394

## Description

### TECHNICAL FIELD

The present invention relates to an air conditioning apparatus and particularly to an air conditioning apparatus that is equipped with a blower fan that supplies air as a heat source to a condenser that configures a refrigerant circuit and which air conditioning apparatus can control the air flow rate of the blower fan such that high pressure in a refrigeration cycle operation reaches a target high pressure.

### BACKGROUND ART

Conventionally, an air conditioning apparatus has been equipped with a blower fan that supplies air as a heat source to a condenser that configures a refrigerant circuit and which air conditioning apparatus controls the air flow rate of the blower fan such that high pressure in a refrigeration cycle operation becomes a target high pressure (see JP-A No. 1-225852).

DE-A-40 08 877 describes cooling apparatus having: a refrigerant circuit including a compressor, a condenser, a first expansion valve, and an evaporator sequentially connected; and a blower fan that supplies air as a heat source to the condenser, wherein the air flow rate of the blower fan and the opening degree of the first expansion valve are controlled such that high pressure in a refrigeration cycle operation of the refrigerant circuit reaches a target high pressure.

US-A-6,161,394 describes a refrigeration system which includes in a closed loop connection a compressor for compressing a refrigerant, a condenser for condensing the compressed refrigerant into a liquid refrigerant, a control valve to controlling the discharge of the liquid refrigerant from the condenser into a reservoir, a sensor for measuring the temperature of the liquid refrigerant near the control valve, a fan for circulating air thorough the condenser, a sensor for measuring the ambient temperature of the air flow through the condenser, and an electronic control system to control various functions of the refrigeration system, including the flow of the liquid refrigerant through the condenser as function of the temperature difference between the ambient temperature and the temperature of the liquid refrigerant. During operation, a minimal flooding of the condenser is always maintained; i.e., a certain amount of liquid refrigerant is always trapped to thereby subcool the liquid refrigerant before discharging it into the reservoir at all ambient temperatures. The liquid refrigerant flow is decreased when the temperature difference is greater than a predetermined value and is increased when the temperature difference is less than the predetermined value. Further improvements in efficiencies are obtained by controlling air flow through the condenser and compressing refrigerant vapors from the reservoir into the condenser.

However, in the aforementioned air conditioning apparatus, it is desirable to ensure that the high pressure can be controlled more finely. Particularly when the outside air temperature is high, the heat exchange efficiency in the condenser drops because the temperature difference between the saturation temperature of the refrigerant in the condenser and the temperature of the air becomes smaller, and therefore there is the fear that the operating efficiency of the apparatus overall cannot be optimized. To counter this, it is conceivable to lower the air flow rate of the blower fan in order to raise the high pressure in the refrigeration cycle; however, although this can raise the saturation temperature of the refrigerant in the condenser and increase the temperature difference with the air, this decreases the flow rate of the air that undergoes heat exchange with the refrigerant, so it is difficult to increase the heat exchange duty itself in the condenser. Further, when the outside air temperature is low, it is conceivable to decrease the heat exchange duty in the condenser by lowering the air flow rate of the blower fan in order to maintain the high pressure in the refrigeration cycle operation; however, the apparatus ends up structurally resonating when the air flow rate is linearly changed, and control is complex, so it is necessary to control the air flow rate stepwise in plural stages. However, when the air flow rate is controlled stepwise in plural stages, the high pressure that is to be in balance between each step differs, so this results in hunting between steps and it becomes difficult for control stability to be obtained.

It is an objective of the present invention to provide an air conditioning apparatus that is equipped with a blower fan that supplies air as a heat source to a condenser included in a refrigerant circuit, which air conditioning apparatus can control the air flow rate of the blower fan such that high pressure in a refrigeration cycle operation becomes a target high pressure, in which apparatus the high pressure can be finely controlled.

According to the invention, there is provided an air conditioning apparatus comprising: a refrigerant circuit that is configured as a result of a compressor, a condenser, a first expansion valve, a second expansion valve, and an evaporator being sequentially connected; a blower fan operable to supply air as a heat source to the condenser; and a controller operable to control the air flow rate of the blower fan and the opening degree of the first expansion valve such that high pressure in a refrigeration cycle operation of the refrigerant circuit reaches a target high pressure; the controller operable: to control the opening degree of the first expansion valve such that a high pressure in a refrigeration cycle operation of the refrigerant circuit reaches a target high pressure in a state where air flow rate control of the blower fan has been performed such that the air flow rate of the blower fan reaches a prescribed air flow rate; and to control the air flow rate of the blower fan to decrease the air flow rate when the high pressure is not larger than a lower limit value of the target high pressure and the opening degree of the first expansion valve is smaller than a minimum opening degree and to increase the air flow rate when the high pressure is larger than an upper limit value of the target high pressure and the opening degree of the first expansion valve is larger than a maximum opening degree.

For a better understanding of the invention and to show how the same may be carried into effect, reference will now be made, by way of example, to the accompanying drawings, in which:
FIG. 1 is a general configuration diagram of an air conditioning apparatus pertaining to an embodiment of the present invention;
FIG. 2 is a control block diagram of the air conditioning apparatus;
FIG. 3 is a flowchart mainly showing control of an outdoor expansion valve of the air conditioning apparatus pertaining to the embodiment of the present invention;
FIG. 4 is a flowchart mainly showing control of an outdoor fan of the air conditioning apparatus pertaining to the embodiment of the present invention;
FIG. 5 is a diagram showing the distribution (excluding the insides of pipes) of liquid refrigerant when the high pressure in the air conditioning apparatus pertaining to the embodiment of the present invention is stable at a standard pressure;
FIG. 6 is a diagram showing the distribution (excluding the insides of pipes) of liquid refrigerant when the high pressure in the air conditioning apparatus pertaining to the embodiment of the present invention is stable at a high pressure; and
FIG. 7 is a diagram showing the distribution (excluding the insides of pipes) of liquid refrigerant when the high pressure in the air conditioning apparatus pertaining to the embodiment of the present invention is stable at a low pressure.

An air conditioning apparatus pertaining to a first aspect comprises: a refrigerant circuit that is configured as a result of a compressor, a condenser, a first expansion valve, a second expansion valve, and an evaporator being sequentially connected; and a blower fan that supplies air as a heat source to the condenser, wherein the air flow rate of the blower fan and the opening degree of the first expansion valve are controlled such that high pressure in a refrigeration cycle operation of the refrigerant circuit becomes a target high pressure. Here, "high pressure in a refrigeration cycle operation" means the pressure of the refrigerant flowing from the discharge side of the compressor, through the condenser, and into the first expansion valve. Further, "target high pressure" is not something that means just a single pressure value but is something that also means, for example, a pressure range between a lower limit value of the high pressure and an upper limit value of the high pressure.

In this air conditioning apparatus, the quantity of the refrigerant accumulating in the condenser is adjusted by controlling the opening degree of the first expansion valve, and therefore control of the high pressure can be performed, so even in an operating condition where the temperature difference between the saturation temperature of the refrigerant in the condenser and the temperature of the air is small and where it is easy for the heat exchange efficiency in the condenser to drop, like, for example, when the outside air temperature is high, the high pressure can be raised and a situation where the heat exchange efficiency in the condenser drops can be suppressed. Further, also with respect to hunting between steps of the air flow rate of the blower fan when the outside air temperature is low, in a situation where the high pressure falls too much in a step where the air flow rate is large, the high pressure can be maintained by accumulating the refrigerant in the condenser, and in a situation where the high pressure rises too much in a step where the air flow rate is small, the high pressure can be maintained by decreasing the refrigerant accumulating in the condenser.

In this manner, in this air conditioning apparatus, not just air flow rate control of the blower fan but opening degree control of the first expansion valve is jointly used, so the high pressure can be controlled finely.

An air conditioning apparatus pertaining to a second aspect is the air conditioning apparatus pertaining to the first aspect, wherein the opening degree of the first expansion valve is controlled such that the high pressure becomes the target high pressure in a state where air flow rate control of the blower fan has been performed such that the air flow rate of the blower fan becomes a prescribed air flow rate, and when the high pressure does not become the target high pressure by opening degree control of the first expansion valve, the prescribed air flow rate is changed by air flow rate control of the blower fan.

In this air conditioning apparatus, control is performed such that the high pressure becomes the target high pressure by opening degree control of the first expansion valve, and basically opening degree control of the first expansion valve becomes performed preferentially over air flow rate control of the blower fan because the prescribed air flow rate of the blower fan is changed when the high pressure does not become the target high pressure by just opening degree control of the first expansion valve, so the high pressure can be controlled even more finely.

An air conditioning apparatus pertaining to a third aspect is the air conditioning apparatus pertaining to the second aspect of the invention, wherein a receiver that can accumulate refrigerant is connected between the first expansion valve and the second expansion valve.

In this air conditioning apparatus, the quantity of the refrigerant accumulating in the condenser fluctuates because of opening degree control of the first expansion valve, but because this fluctuation in the quantity of the refrigerant is absorbed as a result of the quantity of the refrigerant accumulating in the receiver fluctuating and the state of the refrigerant sent to the evaporator is stable, a situation where the quantity of the refrigerant in the evaporator fluctuates or where the state of the refrigerant sucked into the compressor fluctuates, for example, can be suppressed.

In this manner, in this air conditioning apparatus, even though control is performed such that the high pressure becomes the target high pressure by jointly using opening degree control of the first expansion valve together with air flow rate control of the blower fan, it becomes difficult for the quantity of the refrigerant in the portion of the refrigerant circuit from the second expansion valve via the evaporator to the compressor to fluctuate because the receiver that can accumulate the refrigerant is connected between the first expansion valve and the second expansion valve, and therefore it can be made difficult for the control to affect the operating state of the evaporator or the compressor.

An air conditioning apparatus pertaining to a fourth aspect is the air conditioning apparatus pertaining to the third aspect, wherein the opening degree of the second expansion valve is controlled such that a degree of superheat of refrigerant in an outlet of the evaporator or a state quantity equivalent to the degree of superheat becomes a target degree of superheat or a target state quantity equivalent to the target degree of superheat. Here, "state quantity equivalent to the degree of superheat" and "target state quantity equivalent to the target degree of superheat" mean not only the degree of superheat of the refrigerant in the outlet of the evaporator but include also a state quantity equivalent to the degree of superheat of the refrigerant in the outlet of the evaporator, such as the degree of superheat of the refrigerant in the discharge of the compressor.

In this air conditioning apparatus, it can be made difficult for the quantity of the refrigerant in the portion of the refrigerant circuit from the second expansion valve via the evaporator to the compressor to fluctuate because of the receiver, and the quantity of the refrigerant in the evaporator and the state of the refrigerant in the outlet of the evaporator can be stabilized by opening degree control of the second expansion valve, so the operating efficiency of the apparatus overall can be optimized and the reliability of the compressor can be improved (e.g., out-of-gas operation and wet compression can be prevented).

An embodiment of an air conditioning apparatus pertaining to the present invention will now be described below on the basis of the drawings.

### (1) Configuration of Air Conditioning Apparatus

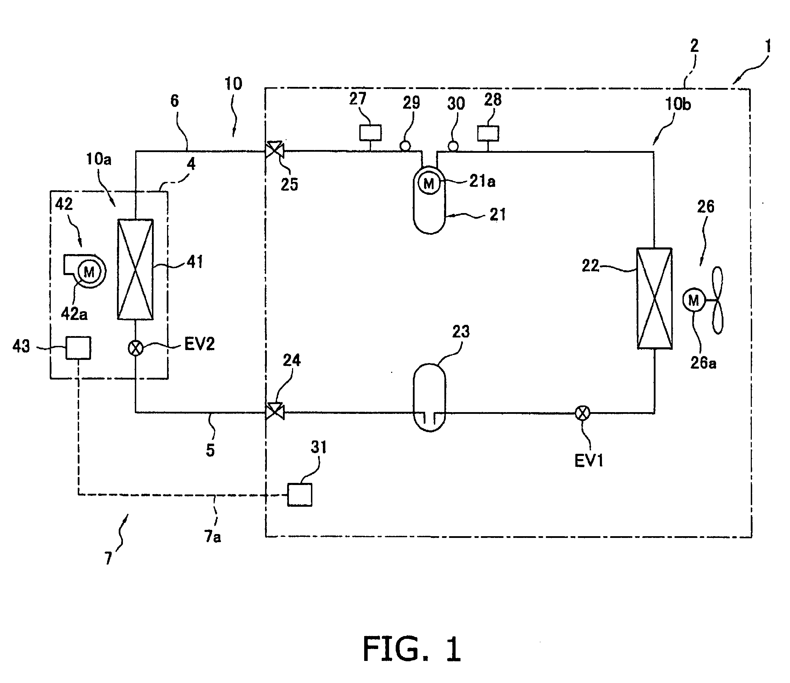

FIG. 1 is a general configuration diagram of an air conditioning apparatus 1 pertaining to an embodiment of the present invention. The air conditioning apparatus 1 is an apparatus used to cool the inside of a room in a building or the like by performing a vapor compression refrigeration cycle operation. The air conditioning apparatus 1 is mainly equipped with an outdoor unit 2, an indoor unit 4, and a liquid refrigerant connection pipe 5 and a gas refrigerant connection pipe 6 that interconnect the outdoor unit 2 and the indoor unit 4. That is, a vapor compression refrigerant circuit 10 of the air conditioning apparatus 1 of the present embodiment is configured as a result of the outdoor unit 2, the indoor unit 4, and the liquid refrigerant connection pipe 5 and the gas refrigerant connection pipe 6 being connected.

### Indoor Unit

The indoor unit 4 is installed by being embedded in or hung from a ceiling inside a room in a building or the like or by being mounted on a wall surface inside a room or the like. The indoor unit 4 is connected to the outdoor unit 2 via the liquid refrigerant connection pipe 5 and the gas refrigerant connection pipe 6 and configures part of the refrigerant circuit 10.

Next, the configuration of the indoor unit 4 will be described. The indoor unit 4 mainly has an indoor-side refrigerant circuit 10a that configures part of the refrigerant circuit 10. This indoor-side refrigerant circuit 10a mainly has an indoor expansion valve EV2 serving as a second expansion valve and an indoor heat exchanger 41.

In the present embodiment, the indoor expansion valve EV2 is an electrically driven expansion valve that is connected to the liquid side of the indoor heat exchanger 41 in order to adjust, for example, the flow rate of the refrigerant flowing through the inside of the indoor-side refrigerant circuit 10a.

In the present embodiment, the indoor heat exchanger 41 is a cross-fin type fin-and-tube heat exchanger configured by heat transfer tubes and numerous fins and is a heat exchanger that functions as an evaporator of the refrigerant to cool the room air.

In the present embodiment, the indoor unit 4 has an indoor fan 42 for sucking the room air into the inside of the unit, allowing heat to be exchanged with the refrigerant in the indoor heat exchanger 41, and thereafter supplying the air to the inside of the room as supply air. The indoor fan 42 is, in the present embodiment, a centrifugal fan or a multiblade fan or the like driven by an indoor fan motor 42a.

Further, the indoor unit 4 has an indoor-side controller 43 that controls the operation of each part configuring the indoor unit 4. Additionally, the indoor-side controller 43 has a microcomputer and a memory and the like disposed in order to control the indoor unit 4 and is configured such that it can exchange control signals and the like with a remote controller (not shown) for individually operating the indoor unit 4 and such that it can exchange control signals and the like with the outdoor unit 2 via a transmission line 7a.

### Outdoor Unit

The outdoor unit 2 is installed outdoors of a building or the like, is connected to the indoor unit 4 via the liquid refrigerant connection pipe 5 and the gas refrigerant connection pipe 6, and configures the refrigerant circuit 10 together with the indoor unit 4.

Next, the configuration of the outdoor unit 2 will be described. The outdoor unit 2 mainly has an outdoor-side refrigerant circuit 10b that configures part of the refrigerant circuit 10. This outdoor-side refrigerant circuit 10b mainly has a compressor 21, an outdoor heat exchanger 22, an outdoor expansion valve EV1 serving as a first expansion valve, a receiver 23, a liquid-side stop valve 24, and a gas-side stop valve 25.

The compressor 21 is, in the present embodiment, a positive displacement compressor driven by a compressor motor 21a. The compressor motor 21a is configured such that it is driven as a result of being supplied with electrical power via an inverter device (not shown) and such that it can vary its operating capacity by varying its frequency (that is, its speed).

In the present embodiment, the outdoor heat exchanger 22 is a cross-fin type fin-and-tube heat exchanger configured by heat transfer tubes and numerous fins and is a heat exchanger that functions as a condenser of the refrigerant. The gas side of the outdoor heat exchanger 22 is connected to the compressor 21, and the liquid side of the outdoor heat exchanger 22 is connected to the outdoor expansion valve EV1.

In the present embodiment, the outdoor unit 2 has an outdoor fan 26 serving as a blower fan for sucking outdoor air into the inside of the unit, allowing heat to be exchanged with the refrigerant in the outdoor heat exchanger 22, and thereafter expelling the air to the outdoors. This outdoor fan 26 is a fan that can vary the air flow rate of the outdoor air as a heat source supplied to the outdoor heat exchanger 22 and, in the present embodiment, is a propeller fan or the like driven by an outdoor fan motor 26a comprising a DC fan motor. The outdoor fan motor 26a is configured such that it is driven as a result of being supplied with electrical power via an inverter device (not shown) and such that it can vary the air flow rate of the outdoor fan 26 by stepwise varying its frequency (that is, its speed).

The receiver 23 is a container that can accumulate refrigerant and is connected between the outdoor expansion valve EV1 and the liquid-side stop valve 24; the receiver 23 can absorb fluctuations in the distribution of the quantity of the refrigerant in the refrigerant circuit 10.

The liquid-side stop valve 24 and the gas-side stop valve 25 are valves disposed in openings to which external devices and pipes (specifically, the liquid refrigerant connection pipe 5 and the gas refrigerant connection pipe 6) connect. The liquid-side stop valve 24 is connected to the receiver 23. The gas-side stop valve 25 is connected to the compressor 21.

Further, various sensors are disposed in the outdoor unit 2. Specifically, a suction pressure sensor 27 that detects the suction pressure of the compressor 21, a discharge pressure sensor 28 that detects the discharge pressure of the compressor 21, a suction temperature sensor 29 that detects the suction temperature of the compressor 21, and a discharge temperature sensor 30 that detects the discharge temperature of the compressor 21 are disposed in the outdoor unit 2. In the present embodiment, the suction temperature sensor 29 and the discharge temperature sensor 30 comprise thermistors. Further, the outdoor unit 2 has an outdoor-side controller 31 that controls the operation of each part configuring the outdoor unit 2. Additionally, the outdoor-side controller 31 has a microcomputer and a memory disposed in order to control the outdoor unit 2 and an inverter circuit and the like that controls the compressor motor 21a, and the outdoor-side controller 31 is configured such that it can exchange control signals and the like with the indoor-side controller 43 of the indoor unit 4 via the transmission line 7a. That is, a controller 7 that performs operation control of the entire air conditioning apparatus 1 is configured by the indoor-side controller 43, the outdoor-side controller 31, and the transmission line 7a that interconnects the indoor-side controller 43 and the outdoor-side controller 31.

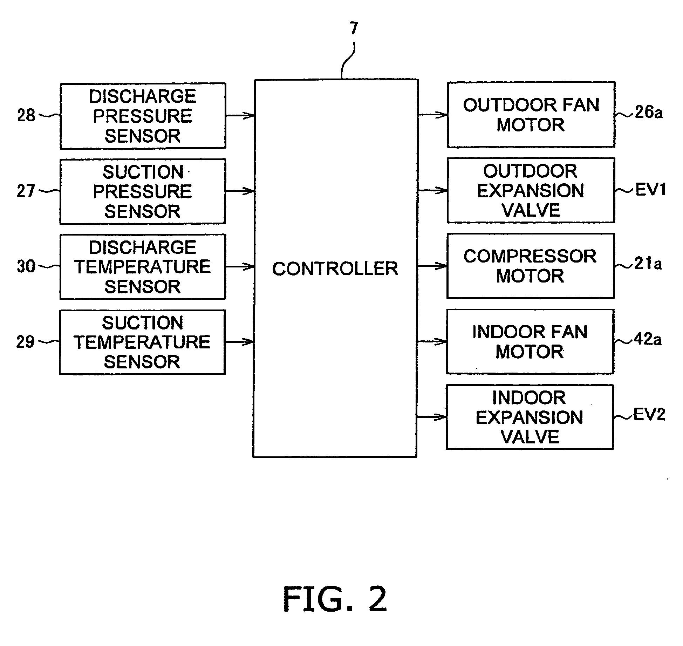

The controller 7 is, as shown in FIG. 2, connected such that it can receive detection signals of the various sensors 27 to 30 and is connected such that it can control the various devices and valves 21a, 26a, 42a, EV1, and EV2 on the basis of these detection signals and the like. Here, FIG. 2 is a control block diagram of the air conditioning apparatus 1.

### Refrigerant Connection Pipes

The refrigerant connection pipes 5 and 6 are refrigerant pipes constructed on site when installing the air conditioning apparatus 1 in an installation location such as a building, and pipes having various lengths and pipe diameters are used depending on installation conditions such as the installation location and the combination of the outdoor unit and the indoor unit.

As described above, the refrigerant circuit 10 of the air conditioning apparatus 1 is configured as a result of the indoor-side refrigerant circuit 10a, the outdoor-side refrigerant circuit 10b, and the refrigerant connection pipes 5 and 6 being connected, that is, as a result of the compressor 21, the outdoor heat exchanger 22 serving as the condenser, the outdoor expansion valve EV1 serving as the first expansion valve, the receiver 23, the refrigerant pipes 5 and 6, the indoor expansion valve EV2 serving as the second expansion valve, and the indoor heat exchanger 41 serving as the evaporator being sequentially connected. Additionally, the air conditioning apparatus 1 of the present embodiment is configured such that it can use the controller 7 configured from the indoor-side controller 43 and the outdoor-side controller 31 to perform control of each device of the outdoor unit 2 and the indoor unit 4.

### (2) Basic Operation of Air Conditioning Apparatus

Next, the basic operation (operation excluding high pressure control described later) of the air conditioning apparatus 1 will be described.

When the compressor 21, the outdoor fan 26 serving as the blower fan, and the indoor fan 42 are started, low-pressure gas refrigerant is sucked into the compressor 21, is compressed, and becomes high-pressure gas refrigerant. Thereafter, the high-pressure gas refrigerant is sent to the outdoor heat exchanger 22 serving as the condenser, condenses in the outdoor heat exchanger 22 as a result of undergoing heat exchange with the outside air supplied by the outdoor fan 26 serving as the blower fan and being cooled, and becomes high-pressure liquid refrigerant. Then, the high-pressure liquid refrigerant that has condensed in the outdoor heat exchanger 22 is sent to the indoor unit 4 via the outdoor expansion valve EV1 (here, in a completely open state) serving as the first expansion valve, the receiver 23, the liquid-side stop valve 24, and the liquid refrigerant connection pipe 5. This high-pressure liquid refrigerant that has been sent to the indoor unit 4 has its pressure reduced by the indoor expansion valve EV2 serving as the second expansion valve, becomes low-pressure refrigerant in a gas-liquid two-phase state, is sent to the indoor heat exchanger 41, evaporates in the indoor heat exchanger 41 as a result of undergoing heat exchange with the room air supplied by the indoor fan 42 and being heated, and becomes low-pressure gas refrigerant. This low-pressure gas refrigerant that has evaporated in the indoor heat exchanger 41 is sent to the outdoor unit 2 via the gas refrigerant connection pipe 6 and the gas-side stop valve 25 and is again sucked into the compressor 21. In this manner, in the refrigerant circuit 10 of the air conditioning apparatus 1 of the present embodiment, a refrigeration cycle operation that cools the inside of the room is performed.

However, within this basic operation, the heat exchange efficiency in the outdoor heat exchanger 22 comes to fluctuate because the temperature difference between the saturation temperature of the refrigerant in the outdoor heat exchanger 22 and the air temperature fluctuates depending on fluctuations in the outside air temperature. To counter this, conventionally, sometimes control is performed with respect to the air flow rate of the outdoor fan 26 such that high pressure in the refrigeration cycle operation (in the present embodiment, the pressure of the refrigerant flowing from the discharge side of the compressor 21, through the outdoor heat exchanger 22, and into the outdoor expansion valve EV1) reaches a target high pressure, but with just air flow rate control of the outdoor fan 26, the heat exchange efficiency in the outdoor heat exchanger 22 drops and therefore there is the fear that the operating efficiency of the air conditioning apparatus 1 overall cannot be optimized because sometimes the air flow rate can only be changed stepwise, it is difficult to control the high pressure finely, and the temperature difference between the saturation temperature of the refrigerant in the outdoor heat exchanger 22 and the temperature of the air becomes smaller particularly when the outside air temperature is high.

Thus, in the present embodiment, the air conditioning apparatus 1 is configured such that the high pressure can be controlled finely mainly not just by air flow rate control of the outdoor fan 26 but by jointly using opening degree control of the outdoor expansion valve EV1.

### (3) Regarding Control of Outdoor Expansion Valve, Outdoor Fan, and Indoor Expansion Valve

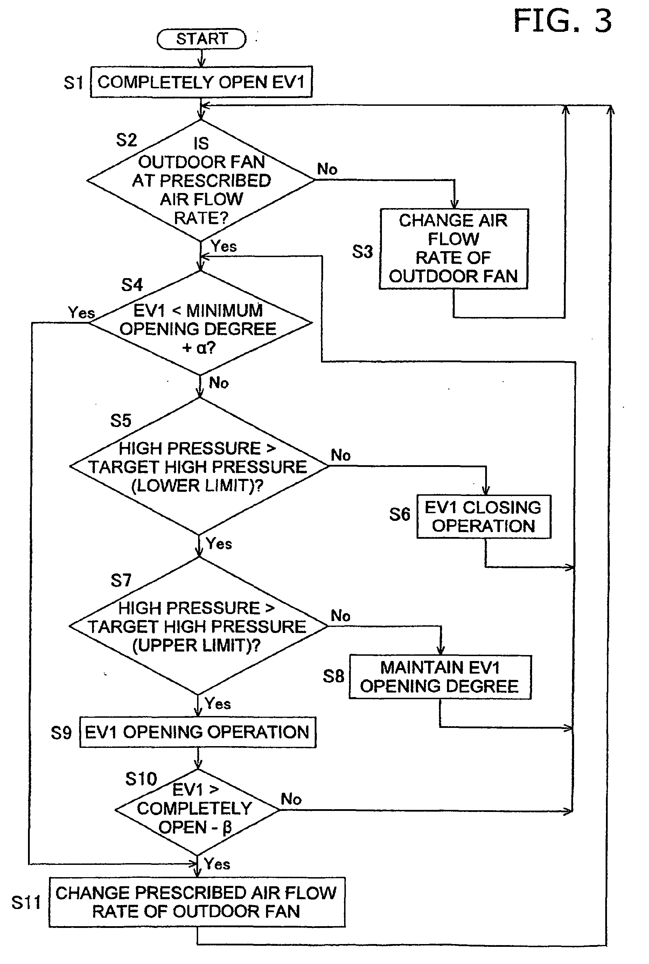

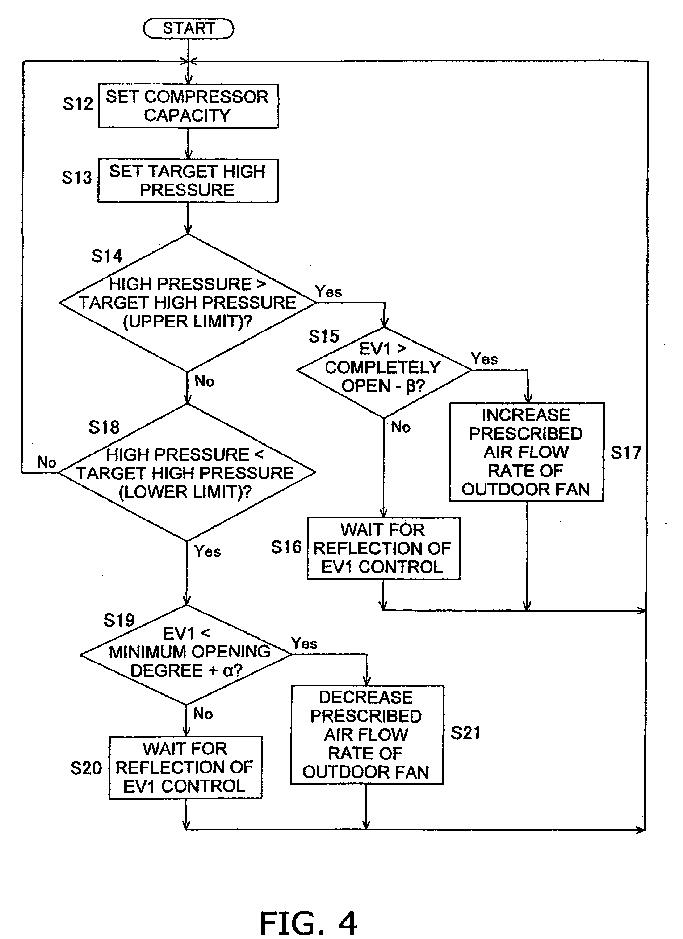

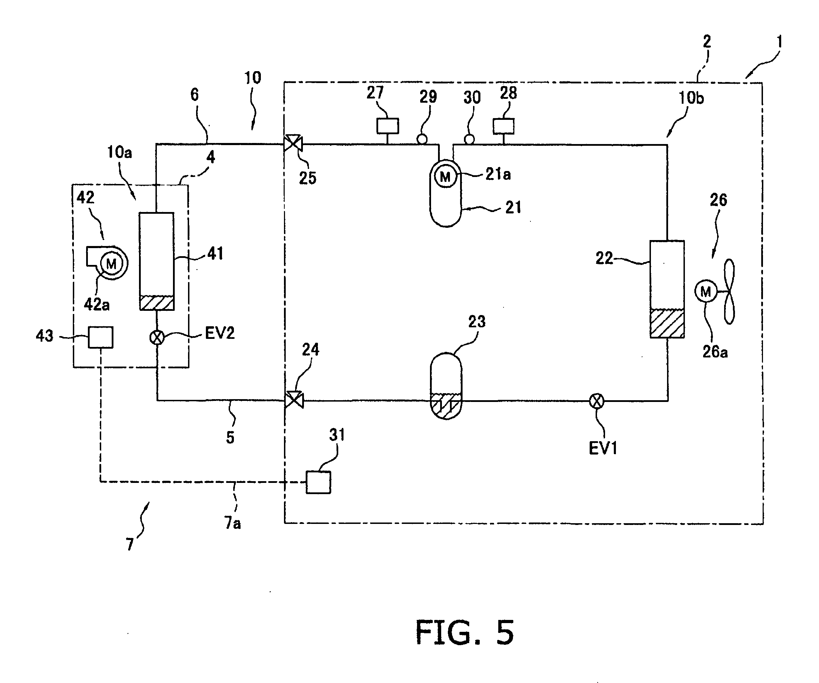

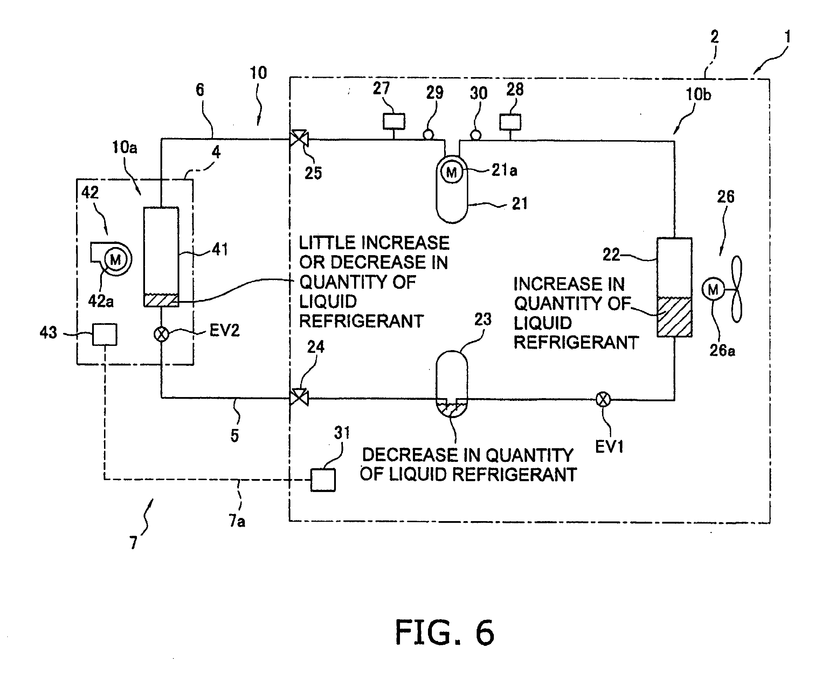

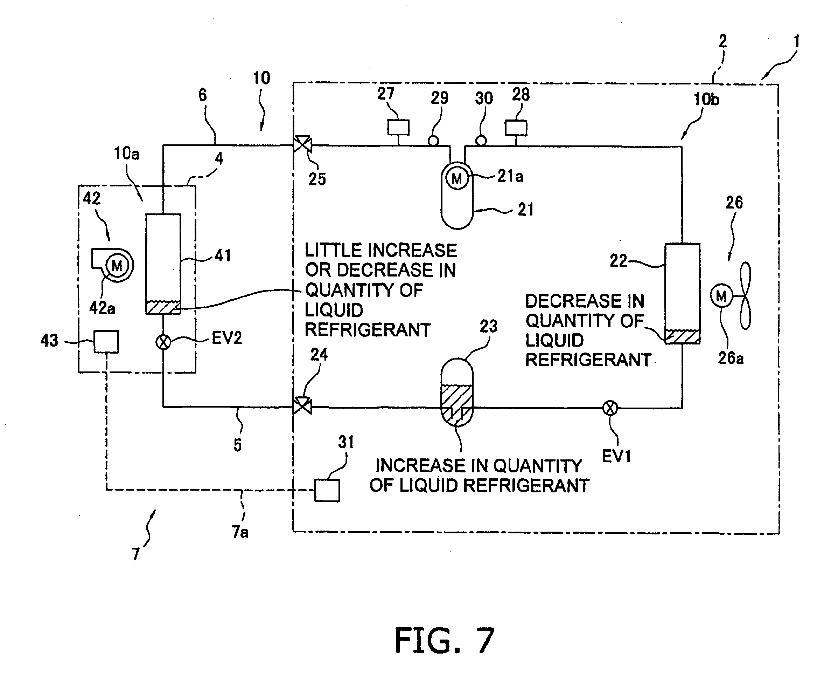

Next, control of the outdoor expansion valve EV1 serving as the first expansion valve, the outdoor fan 26 serving as the blower fan, and the indoor expansion valve EV2 serving as the second expansion valve in the present embodiment will be described using FIGS. 1 to 7. Here, FIG. 3 is a flowchart mainly showing control of the outdoor expansion valve EV1 of the air conditioning apparatus 1 pertaining to the present embodiment, FIG. 4 is a flowchart mainly showing control of the outdoor fan 26 of the air conditioning apparatus 1 pertaining to the present embodiment, FIG. 5 is a diagram showing the distribution (excluding the insides of the pipes) of liquid refrigerant when the high pressure in the air conditioning apparatus 1 pertaining to the present embodiment is stable at a standard pressure, FIG. 6 is a diagram showing the distribution (excluding the insides of the pipes) of liquid refrigerant when the high pressure in the air conditioning apparatus I pertaining to the present embodiment is stable at a high pressure, and FIG. 7 is a diagram showing the distribution (excluding the insides of the pipes) of liquid refrigerant when the high pressure in the air conditioning apparatus 1 pertaining to the present embodiment is stable at a low pressure.

### Regarding Operation of Outdoor Expansion Valve

First, regarding the control in the present embodiment, the operation of the outdoor expansion valve EV1 will be centrally described using FIG. 3.

In step S1, the outdoor expansion valve EV1 is placed in a completely open state, and in step S2, it is determined whether or not the outdoor fan 26 serving as the blower fan has reached a prescribed air flow rate. Here, the step of changing the air flow rate of the outdoor fan 26 is divided into plural stages, and "prescribed air flow rate" means any of these plural steps of changing the air flow rate. Additionally, when the flow moves from step S1 to step S2, the prescribed air flow rate of the outdoor fan 26 is set to a predetermined initial air flow rate. In this manner, until the air flow rate of the outdoor fan 26 reaches the prescribed air flow rate of the outdoor fan 26 by the processing of steps S2 and S3, changing of the air flow rate of the outdoor fan 26 in step S3 is performed, and then the flow moves to the processing of step S4.

Next, in step S4, it is determined whether or not the opening degree of the outdoor expansion valve EV1 is smaller than a minimum opening degree+α. Here, α means a fluctuation in the opening degree of the outdoor expansion valve EV1 that is needed until the inside of the refrigerant circuit 10 becomes stable by changing the prescribed air flow rate of the outdoor fan 26. Additionally, when the flow first moves from step S2 to step S4, the outdoor expansion valve EV1 is in the completely open state and its opening degree is not smaller than the minimum opening degree +α, so the flow moves to the processing of step S5.

Next, in step S5, it is determined whether or not the high pressure in the refrigeration cycle operation is larger than a lower limit value of a target high pressure. Here, the discharge pressure detected by the discharge pressure sensor 28 is used for the high pressure. Further, the target high pressure is defined as a pressure range between a lower limit value and an upper limit value, and these are set on the basis of conditions such as the operating capacity of the compressor 21 and the outside air temperature in step S13 described later. Then, when it has been determined in step S5 that the high pressure in the refrigeration cycle operation is not larger than the lower limit value of the target high pressure, the flow moves to the processing of step S6 where a closing operation that decreases the opening degree of the outdoor expansion valve EV1 is performed, the flow returns to the processing of step S4, and the closing operation of the outdoor expansion valve EV1 in step S6 is repeated until it is determined in step S4 that the opening degree of the outdoor expansion valve EV1 is smaller than the minimum opening degree + α or until it is determined in step S5 that the high pressure in the refrigeration cycle operation is larger than the lower limit value of the target high pressure. Then, when it has been determined in step S5 that the high pressure in the refrigeration cycle operation is larger than the lower limit value of the target high pressure, the flow moves to the processing of step S7.

Next, in step S7, it is determined whether or not the high pressure in the refrigeration cycle operation is larger than the upper limit value of the target high pressure. Then, when it has been determined in step S7 that the high pressure in the refrigeration cycle operation is not larger than the upper limit value of the target high pressure, the flow moves to the processing of step S8 where the opening degree of the outdoor expansion valve EV1 is maintained at the current opening degree. Further, when it has been determined in step S7 that the high pressure in the refrigeration cycle operation is larger than the upper limit value of the target high pressure, the flow moves to the processing of step S9 where an opening operation that increases the opening degree of the outdoor expansion valve EV1 is performed, and then the flow moves to the processing of step S10.

Next, in step S10, it is determined whether or not the opening degree of the outdoor expansion valve EV1 is greater than completely open-β. Here, β means a fluctuation in the opening degree of the outdoor expansion valve EV1 that is needed until the inside of the refrigerant circuit 10 becomes stable by changing the prescribed air flow rate of the outdoor fan 26. Then, when it has been determined in step S10 that the opening degree of the outdoor expansion valve EV1 is not larger than completely open - β, the flow returns to the processing of step S4 and goes through the processing of steps S4 and S5, and the opening operation of the outdoor expansion valve EV1 in step S9 is repeated until it is determined in step S7 that the high pressure in the refrigeration cycle operation is larger than the upper limit value of the target high pressure or until it is determined in step S10 that the opening degree of the outdoor expansion valve EV1 is larger than completely open - β.

In this manner, in the present embodiment, control of the opening degree of the outdoor expansion valve EV1 is performed such that the high pressure in the refrigeration cycle operation falls inside the pressure range between the lower limit value and the upper limit value of the target high pressure in a state where the outdoor fan 26 has been set to a certain prescribed air flow rate.

However, when it has not been determined in step S5 that the high pressure in the refrigeration cycle operation is larger than the lower limit value of the target high pressure and it has been determined in step S4 that the opening degree of the outdoor expansion valve EV1 is smaller than the minimum opening degree +α, or when it has not been determined in step S7 that the high pressure in the refrigeration cycle operation is not larger than the upper limit value of the target high pressure and it has been determined in step S10 that the opening degree of the outdoor expansion valve EV1 is larger than completely open-β, the high pressure in the refrigeration cycle operation cannot fall inside the pressure range between the lower limit value and the upper limit value of the target high pressure by just opening degree control of the outdoor expansion valve EV1, and so the flow moves to the processing of step S11 where the prescribed air flow rate is changed by air flow rate control of the outdoor fan 26, thereafter the flow returns to the processing of steps S2 and S3, and then opening degree control of the outdoor expansion valve EV1 comprising steps S4 to S10 is again performed.

### Regarding Operation of Outdoor Fan

Next, regarding the control in the present embodiment, the operation of the outdoor fan 26 will be centrally described using FIG. 4.

First, in step S 12, the operating capacity of the compressor 21 is decided on the basis of conditions such as the evaporation temperature, and the operating capacity of the compressor 21 is set by frequency control of the compressor motor 21a. Here, a value obtained by converting the suction pressure detected by the suction pressure sensor 27 into the saturation temperature is used for the evaporation temperature. Then, in step S 13, a target high pressure (here, a lower limit value and an upper limit value) is set on the basis of conditions such as the operating capacity of the compressor 21 decided that was in step S12 and the outside air temperature.

Next, in step S 14, like in step S7 described above, it is determined whether or not the high pressure in the refrigeration cycle operation is larger than the upper limit value of the target high pressure. Then, when it has been determined in step S14 that the high pressure in the refrigeration cycle operation is larger than the upper limit value of the target high pressure, the flow moves to the processing of step S15 where, like in step S10 described above, it is determined whether or not the opening degree of the outdoor expansion valve EV1 is larger than completely open-β. Then, when it has been determined in step S15 that the opening degree of the outdoor expansion valve EV1 is not larger than completely open-β, the flow moves to step S16 where it waits for the opening degree control of the outdoor expansion valve EV1 described above to be reflected, and then the flow returns to the processing of step S12. Further, when it has been determined in step S15 that the opening degree of the outdoor expansion valve EV1 is larger than completely open-β, the flow moves to step S17, which corresponds to step S11 described above, where the prescribed air flow rate of the outdoor fan 26 is changed in a direction in which it is increased, and then the flow returns to the processing of step S12. Further, when it has been determined in step S14 that the high pressure in the refrigeration cycle operation is not larger than the upper limit value of the target high pressure, the flow moves to the processing of step S18.

Next, in step S18, which corresponds to step S5 described above, it is determined whether or not the high pressure in the refrigeration cycle operation is smaller than the lower limit value of the target high pressure. Then, when it has been determined in step S18 that the high pressure in the refrigeration cycle operation is smaller than the lower limit value of the target high pressure, the flow moves to the processing of step S19 where, like in step S10 described above, it is determined whether or not the opening degree of the outdoor expansion valve EV1 is smaller than the minimum opening degree+α. Then, when it has been determined in step S19 that the opening degree of the outdoor expansion valve EV1 is not smaller than the minimum opening degree +α, the flow moves to step S20 where it waits for the opening degree control of the outdoor expansion valve EV1 described above to be reflected, and then the flow returns to the processing of step S 12. Further, when it has been determined in step S19 that the opening degree of the outdoor expansion valve EV1 is smaller than the minimum opening degree +α, the flow moves to step S21, which corresponds to step S11 described above, where the prescribed air flow rate of the outdoor fan 26 is changed in a direction in which it is decreased, and then the flow returns to step S12. Further, also when it has been determined in step S18 that the high pressure in the refrigeration cycle operation is not smaller than the lower limit value of the target high pressure, the flow returns to the processing of step S12.

In this manner, in the present embodiment, control of the opening degree of the outdoor expansion valve EV1 is performed such that the high pressure becomes the target high pressure in a state where air flow rate control of the outdoor fan 26 has been performed such that the air flow rate of the outdoor fan 26 becomes the prescribed air flow rate, and when the high pressure does not become the target high pressure by opening degree control of the outdoor expansion valve EV1, control by which the prescribed air flow rate is changed by air flow rate control of the outdoor fan 26 is performed.

### Regarding Operation of Indoor Expansion Valve

In the present embodiment, together with the opening degree control of the outdoor expansion valve EV1 and the air flow rate control of the outdoor fan 26 described above, the opening degree of the indoor expansion valve EV2 is controlled such that the degree of superheat of the refrigerant in the outlet of the indoor heat exchanger 41 serving as the evaporator becomes a target degree of superheat. Here, the degree of superheat of the refrigerant in the outlet of the indoor heat exchanger 41 is obtained by converting the suction pressure detected by the suction pressure sensor 27 into the saturation temperature and subtracting this saturation temperature from the suction temperature detected by the suction temperature sensor 29.

### Regarding_Specific Examples of Control in Present Embodiment

Next, specific examples of the opening degree control of the outdoor expansion valve EV1, the air flow rate control of the outdoor fan 26, and the opening degree control of the indoor expansion valve EV2 described above will be described using FIG. 3 to FIG. 7.

First, when the high pressure in the refrigeration cycle operation is stable at a standard pressure as a result of the opening degree control of the outdoor expansion valve EV1, the air flow rate control of the outdoor fan 26, and the opening degree control of the indoor expansion valve EV2 described above being performed, the distribution (excluding the insides of the pipes) of the liquid refrigerant in the refrigerant circuit 10 becomes the state shown in FIG. 5 (the hatchings shown in the outdoor heat exchanger 22, the receiver 23, and the indoor heat exchanger 41 represent the liquid refrigerant).

In contrast, when the high pressure in the refrigeration cycle operation is stable at a high pressure as a result of the opening degree control of the outdoor expansion valve EV1, the air flow rate control of the outdoor fan 26, and the opening degree control of the indoor expansion valve EV2 described above being performed, the quantity of the liquid refrigerant accumulating in the outdoor heat exchanger 22 increases as shown in FIG. 6 because the opening degree of the outdoor expansion valve EV1 becomes smaller because of the closing operation of the outdoor expansion valve EV1 in step S6, and so the interior capacity of the outdoor heat exchanger 22 decreases. In other words, when the opening degree of the outdoor expansion valve EV1 becomes smaller because of the closing operation of the outdoor expansion valve EV1, the quantity of the liquid refrigerant accumulating in the outdoor heat exchanger 22 increases and the interior capacity of the outdoor heat exchanger 22 decreases, so the high pressure in the refrigeration cycle operation can be made into a high pressure. Moreover, in the present embodiment, the receiver 23 is connected between the outdoor expansion valve EV1 and the indoor expansion valve EV2, so as shown in FIG. 6, the increase in the quantity of the liquid refrigerant accumulating in the outdoor heat exchanger 22 that arises because of the closing operation of the outdoor expansion valve EV1 is absorbed as a result of the quantity of the liquid refrigerant accumulating in the receiver 23 decreasing. Therefore, the state of the refrigerant sent from the receiver 23 to the indoor heat exchanger 41 is stable, and it becomes difficult for the quantity of the refrigerant in the portion of the refrigerant circuit 10 from the indoor expansion valve EV2 via the indoor heat exchanger 41 to the compressor 21 to fluctuate. Moreover, in the present embodiment, opening degree control of the indoor expansion valve EV2 is performed such that the degree of superheat of the refrigerant in the outlet of the indoor heat exchanger 41 becomes the target degree of superheat, so as shown in FIG. 6, there become fewer increases and decreases in the quantity of the liquid refrigerant in the indoor heat exchanger 41, and the quantity of the refrigerant in the indoor heat exchanger 41 and the state of the refrigerant in the outlet of the indoor heat exchanger 41 can be stabilized.

Further, when the high pressure in the refrigeration cycle operation is stable at a low pressure as a result of the opening degree control of the outdoor expansion valve EV1, the air flow rate control of the outdoor fan 26, and the opening degree control of the indoor expansion valve EV2 described above being performed, the quantity of the liquid refrigerant accumulating in the outdoor heat exchanger 22 decreases as shown in FIG. 7 because the opening degree of the outdoor expansion valve EV1 becomes larger because of the opening operation of the outdoor expansion valve EV1 in step S8, and so the interior capacity of the outdoor heat exchanger 22 increases. In other words, when the opening degree of the outdoor expansion valve EV1 becomes larger because of the opening operation of the outdoor expansion valve EV1, the quantity of the liquid refrigerant accumulating in the outdoor heat exchanger 22 decreases and the interior capacity of the outdoor heat exchanger 22 increases, so the high pressure in the refrigeration cycle operation can be made into a low pressure. Moreover, in the present embodiment, the receiver 23 is connected between the outdoor expansion valve EV1 and the indoor expansion valve EV2, so as shown in FIG 7, the decrease in the quantity of the liquid refrigerant accumulating in the outdoor heat exchanger 22 that arises because of the opening operation of the outdoor expansion valve EV1 is absorbed as a result of the quantity of the liquid refrigerant accumulating in the receiver 23 increasing. Therefore, the state of the refrigerant sent from the receiver 23 to the indoor heat exchanger 41 is stable, and it becomes difficult for the quantity of the refrigerant in the portion of the refrigerant circuit 10 from the indoor expansion valve EV2 via the indoor heat exchanger 41 to the compressor 21 to fluctuate. Moreover, in the present embodiment, opening degree control of the indoor expansion valve EV2 is performed such that the degree of superheat of the refrigerant in the outlet of the indoor heat exchanger 41 becomes the target degree of superheat, so as shown in FIG. 7, there become fewer increases and decreases in the quantity of the liquid refrigerant in the indoor heat exchanger 41, and the quantity of the refrigerant in the indoor heat exchanger 41 and the state of the refrigerant in the outlet of the indoor heat exchanger 41 can be stabilized.

### (4) Characteristics of Present Embodiment

The air conditioning apparatus 1 of the present embodiment has the following characteristics.
A) In the air conditioning apparatus 1 of the present embodiment, the quantity of the refrigerant accumulating in the outdoor heat exchanger 22 serving as the condenser is adjusted by controlling the opening degree of the outdoor expansion valve EV1 serving as the first expansion valve, and therefore control of the high pressure can be performed, so even in an operating condition where the temperature difference between the saturation temperature of the refrigerant in the outdoor heat exchanger 22 and the temperature of the air is small and where it is easy for the heat exchange efficiency in the outdoor heat exchanger 22 to drop, like, for example, when the outside air temperature is high, the high pressure can be raised and a situation where the heat exchange efficiency in the outdoor heat exchanger 22 drops can be suppressed. Further, also with respect to hunting between steps of the air flow rate of the outdoor fan 26 when the outside air temperature is low, in a situation where the high pressure falls too much in a step where the air flow rate is large, the high pressure can be maintained by accumulating the refrigerant in the outdoor heat exchanger 22, and in a situation where the high pressure rises too much in a step where the air flow rate is small, the high pressure can be maintained by decreasing the refrigerant accumulating in the outdoor heat exchanger 22.
   In this manner, in the air conditioning apparatus 1 of the present embodiment, not just air flow rate control of the outdoor fan 26 serving as the blower fan but opening degree control of the outdoor expansion valve EV1 is jointly used, so the high pressure can be controlled finely. This is particularly effective when using an outdoor fan whose air flow rate can only be changed stepwise like the outdoor fan 26 of the present embodiment.
B) In the air conditioning apparatus 1 of the present embodiment, control is performed such that the high pressure becomes the target high pressure by opening degree control of the outdoor expansion valve EV1, and basically opening degree control of the outdoor expansion valve EV1 becomes performed preferentially over air flow rate control of the outdoor fan 26 because the prescribed air flow rate of the outdoor fan 26 is changed when the high pressure does not become the target high pressure by just opening degree control of the outdoor expansion valve EV1, so the high pressure can be controlled even more finely.
C) In the air conditioning apparatus 1 of the present embodiment, the quantity of the refrigerant accumulating in the outdoor heat exchanger 22 fluctuates because of opening degree control of the outdoor expansion valve EV1, but because this fluctuation in the quantity of the refrigerant is absorbed as a result of the quantity of the refrigerant accumulating in the receiver 23 fluctuating and the state of the refrigerant sent to the indoor heat exchanger 41 serving as the evaporator is stable, a situation where the quantity of the refrigerant in the indoor heat exchanger 41 fluctuates or where the state of the refrigerant sucked into the compressor 21 fluctuates, for example, can be suppressed.
   In this manner, in the air conditioning apparatus 1 of the present embodiment, even though control is performed such that the high pressure becomes the target high pressure by jointly using opening degree control of the outdoor expansion valve EV1 together with air flow rate control of the outdoor fan 26, it becomes difficult for the quantity of the refrigerant in the portion of the refrigerant circuit 10 from the indoor expansion valve EV2 via the indoor heat exchanger 41 to the compressor 21 to fluctuate because the receiver 23 that can accumulate the refrigerant is connected between the outdoor expansion valve EV1 and the indoor expansion valve EV2 serving as the second expansion valve, and therefore it can be made difficult for the control to affect the operating state of the indoor heat exchanger 41 or the compressor 21.
D) In the air conditioning apparatus 1 of the present embodiment, it can be made difficult for the quantity of the refrigerant in the portion of the refrigerant circuit 10 from the indoor expansion valve EV2 via the indoor heat exchanger 41 to the compressor 21 to fluctuate because of the receiver 23, and the quantity of the refrigerant in the indoor heat exchanger 41 and the state of the refrigerant in the outlet of the indoor heat exchanger 41 can be stabilized by opening degree control of the indoor expansion valve EV2, so the operating efficiency of the air conditioning apparatus 1 overall can be optimized and the reliability of the compressor 21 can be improved (e.g., out-of-gas operation and wet compression can be prevented).

### (5) Other Embodiments

An embodiment of the present invention has been described above on the basis of the drawings, but the specific configurations thereof are not limited to this embodiment and can be changed in a range not departing from the gist of the invention.
A) In the embodiment described above, an example has been described where the present invention was applied to the separate type air conditioning apparatus 1 where the compressor 21 and the outdoor heat exchanger 22 are disposed in the outdoor unit 2, but the present invention is not limited to this and may also be applied to air conditioning apparatus of other unit configurations, such as a remote condenser type air conditioning apparatus where the compressor 21 is disposed in the indoor unit 4.
   Further, in the embodiment described above, an example has been described where the present invention was applied to the dedicated cooling type air conditioning apparatus 1 that performs only cooling, but the present invention is not limited to this and may also be applied to air conditioning apparatus of other types, such as a cooling-and-heating switchable type air conditioning apparatus that can switch between cooling and heating and a simultaneous cooling-and-heating type air conditioning apparatus that can simultaneously perform cooling and heating.
B) In the embodiment described above, the discharge pressure detected by the discharge pressure sensor 28 was used as the high pressure, but the present invention is not limited to this, and temperatures or pressures detected by other types of sensors may also be used; for example, when a temperature sensor is disposed in the outdoor heat exchanger 22, the refrigerant temperature detected by this temperature sensor may be converted to the saturation pressure and used as the high pressure.
   Further, in the embodiment described above, the target high pressure was defined as a pressure range between the lower limit value of the high pressure and the upper limit value of the high pressure, but the target high pressure is not limited to this and may also, for example, be a single pressure value.
C) In the embodiment described above, the opening degree of the indoor expansion valve EV2 serving as the second expansion valve is controlled such that the degree of superheat of the refrigerant in the outlet of the indoor heat exchanger 41 serving as the evaporator becomes the target degree of superheat, but the present invention is not limited to this; the opening degree of the indoor expansion valve EV2 may also be controlled such that a state quantity equivalent to the degree of superheat of the refrigerant in the outlet of the indoor heat exchanger 41, such as the degree of superheat of the refrigerant in the discharge of the compressor 21, becomes a target state quantity equivalent to the target degree of superheat. Here, the degree of superheat of the refrigerant in the discharge of the compressor 21 is obtained by subtracting, from the discharge temperature of the compressor 21 (the discharge temperature detected by the discharge temperature sensor 30), a value obtained by converting the discharge pressure of the compressor 21 (the discharge pressure detected by the discharge pressure sensor 28) into the saturation temperature.
D) In the embodiment described above, opening and closing the outdoor expansion valve EV1 depending on whether the high pressure is high or low with respect to the target high pressure has been described, but the speed at which the outdoor expansion valve EV1 is opened and closed may also be varied depending on the difference between the high pressure and the target high pressure, and PI control or the like may also be applied in relation to deciding the speed at which the outdoor expansion valve EV1 is opened and closed.
E) In the embodiment described above, controlling the outdoor expansion valve EV1 before or during changing the air flow rate of the outdoor fan 26 has not been described, but changes in the high pressure resulting from changing the air flow rate of the outdoor fan 26 may be predicted beforehand, and feed-forward control that performs control to open and close the outdoor expansion valve EV1 by a predetermined opening degree beforehand or performs control to open and close the outdoor expansion valve EV1 at a predetermined speed within a predetermined amount of time beforehand may also be performed.

### INDUSTRIAL APPLICABILITY

The present invention is widely applicable to air conditioning apparatus that are equipped with a blower fan that supplies air as a heat source to a condenser that configures a refrigerant circuit and which air conditioning apparatus can control the air flow rate of the blower fan such that high pressure in a refrigeration cycle operation becomes a target high pressure.

### REFERENCE SIGNS LIST

1 : Air Conditioning Apparatus
10 Refrigerant Circuit
21 Compressor
22 Outdoor Heat Exchanger (Condenser)
23 Receiver
26 Outdoor Fan (Blower Fan)
41 Indoor Heat Exchanger (Evaporator)
EV1 Outdoor Expansion Valve (First Expansion Valve)
EV2 : Indoor Expansion Valve (Second Expansion Valve)

## Claims

1. An air conditioning apparatus (1) comprising:
a refrigerant circuit (10) that is configured as a result of a compressor (21), a condenser (22), a first expansion valve (EV1), a second expansion valve (EV2), and an evaporator (41) being sequentially connected;
a blower fan (26) operable to supply air as a heat source to the condenser; and
a controller (7) operable to control the air flow rate of the blower fan (26) and the opening degree of the first expansion valve (EV1) such that high pressure in a refrigeration cycle operation of the refrigerant circuit reaches a target high pressure; the controller (7) operable:
to control (S6,S8,S9) the opening degree of the first expansion valve (EV1) such that a high pressure in a refrigeration cycle operation of the refrigerant circuit reaches a target high pressure in a state where air flow rate control of the blower fan (26) has been performed such that the air flow rate of the blower fan reaches a prescribed air flow rate; and
to control (S11) the air flow rate of the blower fan (26) to decrease the air flow rate when the high pressure is not larger than a lower limit value of the target high pressure (S18) and the opening degree of the first expansion valve (EV 1) is smaller than a minimum opening degree (S 19) and to increase the air flow rate when the high pressure is larger than an upper limit value of the target high pressure (S14) and the opening degree of the first expansion valve (EV1) is larger than a maximum opening degree (S 15).

2. The air conditioning apparatus (1) according to claim 1, wherein a receiver (23) that can accumulate refrigerant is connected between the first expansion valve (EV1) and the second expansion valve (EV2).

3. The air conditioning apparatus (1) according to claim 2, wherein said controller (7) is operable to control the opening degree of the second expansion valve (EV2) such that a degree of superheat of refrigerant in an outlet of the evaporator (41) or a state quantity equivalent to the degree of superheat reaches a target degree of superheat or a target state quantity equivalent to the target degree of superheat.

## Patentansprüche

1. Eine Klimaanlagenvorrichtung (1), umfassend:
einen Kühlmittelkreislauf (10), welcher als ein Ergebnis ausgebildet ist, dass ein Kompressor (21), ein Kühler (22), ein erstes Expansionsventil (EV1), ein zweites Expansionsventil (EV 2) und ein Verdampfer (41) sequenziell verbunden sind;
einen Gebläselüfter (26), betreibbar zum Zuführen von Luft als eine Wärmequelle an den Kühler; und
eine Steuereinheit (7), betreibbar zum Steuern der Luftflussrate des Gebläselüfters (26) und des Öffnungsgrades des ersten Expansionsventils (EV 1), sodass ein Hochdruck in einem Kühlkreislauf-Betrieb des Kühlmittelkreislaufs einen Zielhochdruck erreicht; wobei die Steuereinheit (7) betreibbar ist:
zum Steuern (S6, S8, S9) des Öffnungsgrades des ersten Expansionsventils (EV 1), sodass ein Hochdruck in einem Kühlkreislauf-Betrieb des Kühlmittelkreislaufs einen Zielhochdruck in einem Zustand erreicht, bei welchem eine Luftflussratensteuerung des Gebläselüfters (26) so ausgeführt wurde, dass die Luftflussrate des Gebläselüfters eine vorgeschriebene Luftflussrate erreicht; und
zum Steuern (S11) der Luftflussrate des Gebläselüfters (26) zum Erniedrigen der Luftflussrate, wenn der Hochdruck nicht größer als ein unterer Grenzwert des Zielhochdrucks ist (S18) und der Öffnungsgrad des ersten Expansionsventils (EV 1) kleiner als ein minimaler Öffnungsgrad (S19) ist, und zum Erhöhen der Luftflussrate, wenn der Hochdruck größer als ein oberer Grenzwert des Zielhochdrucks ist (S14) und der Öffnungsgrad des ersten Expansionsventils (EV 1) größer als ein maximaler Öffnungsgrad ist (S15).

2. Klimaanlagenvorrichtung (1) gemäß Anspruch 1, wobei ein Empfänger (23), welcher ein Kühlmittel anhäufen kann, zwischen dem ersten Expansionsventil (EV 1) und dem zweiten Expansionsventil (EV 2) verbunden ist.

3. Klimaanlagenvorrichtung (1) gemäß Anspruch 2, wobei die Steuereinheit (7) zum Steuern des Öffnungsgrades des zweiten Expansionsventils (EV 2) so betreibbar ist, dass ein Grad eines Siedeverzugs eines Kühlmittels in einem Auslass des Kühlers (41) oder eine zu dem Grad eines Siedeverzugs äquivalente Zustandsgröße einen Zielgrad eines Sideverzugs oder eine zu dem Zielgrad eines Sideverzugs äquivalente Zielzustandsgröße erreicht.

## Revendications

1. Appareil de conditionnement d'air (1) comprenant :
un circuit réfrigérant (10) qui est configuré en tant que résultat d'un compresseur (21), d'un condenseur (22), d'une première soupape de détente (EV1), d'une deuxième soupape de détente (EV2), et d'un évaporateur (41) étant reliés de manière séquentielle ;
un ventilateur soufflant (26) pouvant fonctionner pour fournir de l'air en tant que source de chaleur au condenseur ; et
une unité de commande (7) pouvant fonctionner pour commander le débit d'air du ventilateur soufflant (26) et le degré d'ouverture de la première soupape de détente (EV1) de sorte qu'une haute pression dans un fonctionnement de cycle de réfrigération du circuit réfrigérant atteigne une haute pression cible ; l'unité de commande (7) pouvant fonctionner :
pour commander (S6, S8, S9) le degré d'ouverture de la première soupape de détente (EV1) de sorte qu'une haute pression dans un fonctionnement de cycle de réfrigération du circuit réfrigérant atteigne une haute pression cible dans un état où une commande de débit d'air du ventilateur soufflant (26) a été réalisée de sorte que le débit d'air du ventilateur soufflant atteigne un débit d'air prescrit ; et
pour commander (S11), le débit d'air du ventilateur soufflant (26) pour diminuer le débit d'air lorsque la haute pression ne dépasse pas une valeur limite inférieure de la haute pression cible (S18) et le degré d'ouverture de la première soupape de détente (EV1) est inférieur à un degré d'ouverture minimal (S19) et pour augmenter le débit d'air lorsque la haute pression est supérieure à une valeur limite supérieure de la haute pression cible (S14) et le degré d'ouverture de la première soupape de détente (EV1) est supérieur à un degré d'ouverture maximal (S15).

2. Appareil de conditionnement d'air (1) selon la revendication 1, dans lequel un récepteur (23) qui peut accumuler un fluide frigorigène est relié entre la première soupape de détente (EV1) et la deuxième soupape de détente (EV2).

3. Appareil de conditionnement d'air (1) selon la revendication 2, dans lequel ladite unité de commande (7) peut fonctionner pour commander le degré d'ouverture de la deuxième soupape de détente (EV2) de sorte qu'un degré de surchauffe du fluide frigorigène dans une sortie de l'évaporateur (41) ou une grandeur d'état équivalente au degré de surchauffe atteigne un degré cible de surchauffe ou une grandeur d'état cible équivalente au degré cible de surchauffe.
